# EUROPEAN PATENT SPECIFICATION

(11) **EP 4 397 462 B1**
(45) Date of publication and mention of the grant of the patent: **02.04.2025**
(21) Application number: 23211341.5
(22) Date of filing: 22.11.2023
(51) Int. Cl.: B27B 17/08, A01G 3/08, B25F 5/00, B27B 17/12, B27B 17/00

(54) **POLE CHAIN SAW**
STANGENKETTENSÄGE
SCIE À CHAÎNE À PERCHE

(30) Priority: 09.01.2023 CN 202320061334 U
(43) Date of publication of application: 10.07.2024
(73) Proprietor: Nanjing Chervon Industry Co., Ltd., Nanjing, Jiangsu 211106 (CN)
(72) Inventor: LI, Yang, Nanjing (CN); WANG, Haoyu, Nanjing (CN)
(74) Representative: Sun, Yiming

(56) References cited:
- WO-A1-2004/087385
- WO-A1-2022/242525
- CN-A- 114 073 201
- CN-U- 214 430 378
- US-A1- 2010 083 513
- US-A1- 2022 134 592

## Description

### TECHNICAL FIELD

The present application relates to a pole chain saw as per the preamble of appended claim 1.

### BACKGROUND

As a garden tool, a pole chain saw can be used for trimming branches and performing a cutting operation on an object at a high or distant position. The connecting rod of the chain saw is usually designed to be longer, and an electric motor, a chain, a guide plate, and the like are disposed at the front end of the connecting rod. On the market, most pole chain saws use plastic gearboxes and have a poor heat dissipation effect and low assembly accuracy, greatly shortening the service life of the gearbox and the transmission mechanism. CN214430378U discloses a pole chain saw as per the preamble of appended claim 1.

### SUMMARY

An object of the present application is to solve or at least alleviate some or all of the preceding problems. For this reason, an object of the present application is to provide a pole chain saw that can enhance the heat dissipation effect of a gearbox and increase the service life of a transmission mechanism.

To achieve the preceding object, the present application provides a pole chain saw comprising the combination of features of appended claim 1.

Preferred embodiments are disclosed by the dependent claims.

In some examples, the front end assembly further includes a front end housing for supporting the connecting rod, where the front end housing includes a first housing and a second housing, where a first accommodation chamber and a second accommodation chamber are formed between the first housing and the second housing.

In some examples, the first accommodation chamber is used for accommodating the electric motor, and the second accommodation chamber is used for accommodating the gearbox.

In some examples, a front end housing is formed with at least one air inlet and at least one air outlet, and an airflow flowing into the front end housing from the at least one air inlet flows through the gearbox and the electric motor in sequence and then flows out from the at least one air outlet.

In some examples, the at least one air inlet is located at the rear side of the gearbox, and the at least one air outlet is located radially outside a fan.

In some examples, an air hole is formed on a front end housing at a position relative to the gearbox.

In some examples, the gearbox includes a first box lid and a second box lid, where after being mounted, the first box lid and the second box lid form an accommodation space to accommodate at least part of the transmission assembly.

In some examples, a transmission mechanism includes a first transmission gear, a second transmission gear, where a motor shaft of the electric motor drives the first transmission gear to rotate, the first transmission gear meshes with the second transmission gear to drive the second transmission gear to rotate, the second transmission gear drives the output shaft to rotate.

In some examples, the extension direction of the motor shaft is perpendicular to the extension direction of the output shaft.

In some examples, the oil fill hole is further formed on a front end housing, where the oil fill hole extends from the front end housing to a meshing point of the first transmission gear and the second transmission gear.

In some examples, a transmission mechanism further includes a bearing sleeved on an output shaft, and an outer race of the bearing has an interference fit with the gearbox.

In some examples, an inner race of the bearing has a clearance fit with the output shaft. In some examples, at least part of the gearbox is integrally formed with a front end housing.

### BRIEF DESCRIPTION OF DRAWINGS

FIG. 1 is a perspective view illustrating the structure of a pole chain saw as an example of the present application;
FIG. 2 is a perspective view illustrating the structure of a front end assembly of the pole chain saw in FIG. 1;
FIG. 3 is an exploded view illustrating the structure of the front end assembly in FIG. 2;

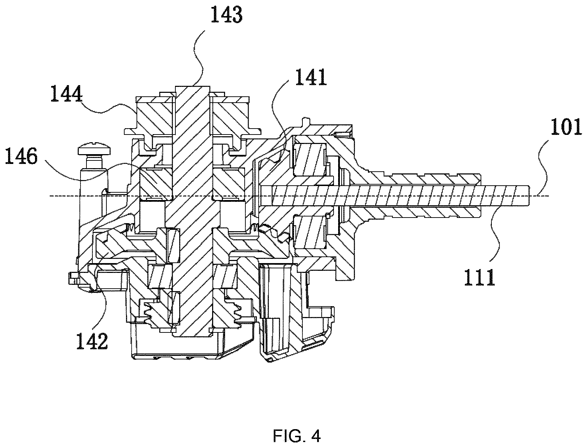

FIG. 4 is a sectional view of a transmission mechanism in the front end assembly in FIG. 2;
FIG. 5 is an exploded view illustrating the structures of a transmission mechanism and an electric motor in the front end assembly in FIG. 2; and
FIG. 6 is an exploded view illustrating the structure of the front end assembly in FIG. 2 from another perspective.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom. In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

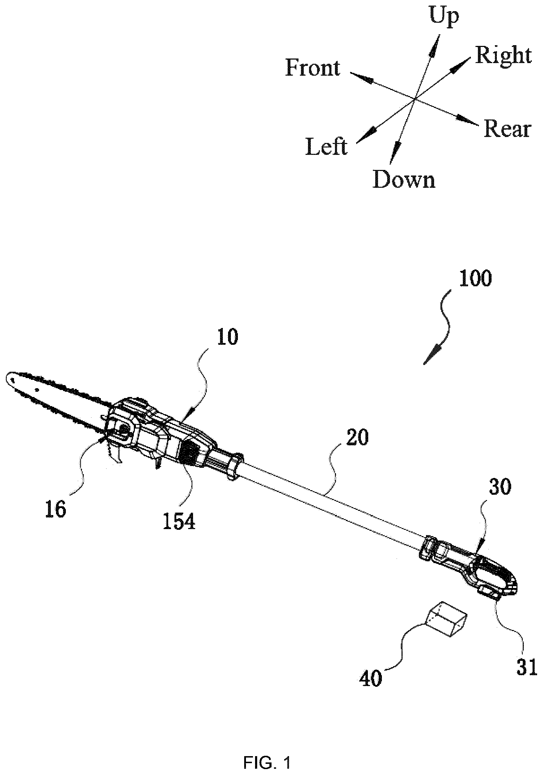

As shown in FIG. 1, a pole chain saw 100 disclosed in the present application is a commonly used garden tool and may be used for trimming branches and the like. The pole chain saw 100 may be operated and controlled by a user to trim branches. In this specification, a front and rear direction, a left and right direction, and an up and down direction are described as directions shown in FIG. 1. Specifically, when the user operates the pole chain saw 100, it is defined that a direction which the user faces is the front, a direction which the user faces away from is the rear, a direction on the left-hand side of the user is the left, a direction on the right-hand side of the user is the right, a direction facing the ground is the down, and a direction facing away from the ground is the up.

The pole chain saw 100 includes a front end assembly 10 and a connecting rod 20. The front end assembly 10 is used for outputting and operating and is disposed at the front end of the connecting rod 20.

The front end assembly 10 includes an electric motor 11, an output device 12, and a front end housing 13. The output device 12 includes a guide plate 121 and a chain 122 wound around the guide plate 121. The electric motor 11 includes a motor shaft 111 rotatable about a first axis 101, and the rotational output of the motor shaft 111 drives the chain 122 to rotate, thereby performing a cutting operation. The front end housing 13 is disposed at the front end of the connecting rod 20 and is used for supporting the electric motor 11 and the output device 12. The connecting rod 20 is a long rod with a certain length so that the user can send the chain 122 to a branch or other remote positions to perform the cutting operation.

The connecting rod 20 is fixed in the front end housing 13 and extends into a rear end housing 30. The rear end housing 30 is formed with or connected to a coupling portion 31, and a power supply device 40 is detachably connected to the coupling portion 31 to supply electrical energy to at least the electric motor 11.

The pole chain saw 100 further includes a transmission mechanism 14, and the transmission mechanism 14 connects the electric motor 11 to the output device 12. The front end housing 13 includes a first housing 131 and a second housing 132. A first accommodation chamber 133 and a second accommodation chamber 134 are formed between the first housing 131 and the second housing 132. The first accommodation chamber 133 is used for accommodating the electric motor 11, and the second accommodation chamber 134 is used for accommodating the transmission mechanism 14. Specifically, the first housing 131 and the second housing 132 form a two-half housing structure of the front end housing 13, and the first housing 131 engages with the second housing 132, so as to limit the positions of the electric motor 11 and the transmission mechanism 14.

Specifically, the transmission mechanism 14 includes a transmission assembly 14a. Specifically, the transmission assembly 14a includes a first transmission gear 141, a second transmission gear 142, an output shaft 143, and a chainwheel 144. The first transmission gear 141 and the second transmission gear 142 may be configured to be bevel gears. In some examples, the end of the motor shaft 111 is connected to the first transmission gear 141. In some examples, the motor shaft 111 and the first transmission gear 141 are integrally formed. The motor shaft 111 drives the first transmission gear 141 to rotate, the first transmission gear 141 drives the second transmission gear 142 to rotate, the second transmission gear 142 drives the output shaft 143 to rotate synchronously, the output shaft 143 drives the chainwheel 144 to rotate, and the chain 122 is driven by the chainwheel 144 to move on the guide plate 121. Of course, in some examples, the motor shaft 111 and the first transmission gear 141 are designed as separate parts, and the first transmission gear 141 is sleeved on the end of the motor shaft 111.

**In** some examples, the transmission mechanism 14 further includes a gearbox 145. **The** gearbox 145 includes a first box lid 1451 and a second box lid 1452. After being mounted, the first box lid 1451 and the second box lid 1452 form an accommodation space (not shown in the figure). **The** first transmission gear 141, the second transmission gear 142, and the output shaft 143 are disposed in the preceding accommodation space. Specifically, the gearbox 145 is made of metal The transmission mechanism 14 further includes a bearing 146 sleeved on the output shaft 143. Specifically, an outer race of the bearing 146 abuts against and has an interference fit with the gearbox 145. An inner ring of the bearing 146 has a clearance fit with the output shaft 143, thereby ensuring that the output shaft 143 is rotatable relative to the bearing 146.

In this manner, on the one hand, a gearbox made of metal is used so that the machining accuracy can be improved and the fit between the bearing, the front end housing, and the output shaft can be ensured. On the other hand, the preceding metal gearbox is used so that the heat dissipation effect can be enhanced and the service life of the gearbox can be increased.

To verify the technical effect of the technical solution adopted by the chain saw in the present application, a comparison test is conducted between the chain saw in the present application and a chain saw using a traditional plastic gearbox. The test method is: to remove the chain and the guide plate, connect the machine to a 50.4V voltage regulator, and apply resistance to the output shaft of the machine through a load device to simulate the actual cutting condition of the machine. The actual test process is: to run with no load for 10s, run with a 15A load for 10s, run with a 20A load for 15s, run with a 15A load for 10s, and run with no load for 15s. The preceding process is repeated. Table 1 below is the data of the comparison test between the service life of the transmission mechanism of the chain saw in the present application and the service life of the transmission mechanism of the chain saw using the plastic gearbox.

**Table 1 Test Result Table of the Service Life of the Transmission Mechanism**

| | The present application | Comparison 1 | Comparison 2 | Comparison 3 |
|---|---|---|---|---|
| Service life/h | 340h | 250h | 255h | 252h |

The chain saw in the present application uses the metal gearbox, while Comparison 1, Comparison 2, and Comparison 3 use plastic gearboxes. As can be seen from Table 1 above, the service life of the transmission mechanism of the chain saw in the present application can be increased by at least 33% compared to the service life of the transmission mechanism of the chain saw using the plastic gearbox.

Of course, at least part of the preceding gearbox 145 is integrally formed with the front end housing 13. It is to be understood that part of the front end housing for supporting the transmission mechanism 14 is made of metal.

In some examples, the first box lid 1451 of the gearbox 145 and the first housing 131 of the front end housing 13 are integrally formed. The second box lid 1452 of the gearbox 145 and the second housing 132 of the front end housing 13 are integrally formed. In this manner, after the first housing 131 and the second housing 132 are assembled, the gearbox accommodating the transmission mechanism 14 is formed. Specifically, the first housing 131 and the second housing 132 are made of metal.

In some examples, the first box lid 1451 of the gearbox 145 and the first housing 131 of the front end housing 13 are integrally formed. The second box lid 1452 of the gearbox 145 and the second housing 132 of the front end housing 13 are provided separately. Specifically, the first housing 131 and the second box lid 1452 are made of metal.

In some examples, the first box lid 1451 of the gearbox 145 and the first housing 131 of the front end housing 13 are provided separately. The second box lid 1452 of the gearbox 145 and the second housing 132 of the front end housing 13 are integrally formed. The first box lid 1451 and the second housing 132 are made of metal.

In this manner, at least part of the gearbox 145 is integrally formed with the front end housing 13 so that while the service life of the transmission mechanism 14 can be increased, the number of components can be reduced and the assembly difficulty can be reduced.

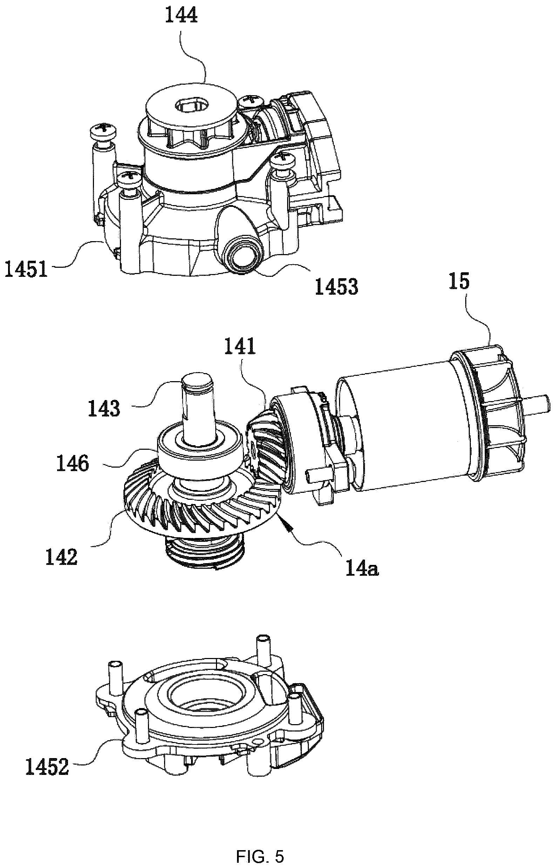

As shown in FIG. 5, to lubricate the transmission mechanism 14, an oil fill hole 1453 is disposed on the front end housing. Specifically, the oil fill hole 1453 is disposed on the gearbox 145. Lubricating oil is injected through the oil fill hole 1453 into the meshing point of the first transmission gear 141 and the second transmission gear 142, so as to reduce the friction between the first transmission gear 141 and the second transmission gear 142 and improve the service life of the first transmission gear 141 and the second transmission gear 142. Specifically, the oil fill hole 1453 may be closed by a bolt.

The oil fill hole 1453 is disposed on the gearbox 145. The gearbox 145 is provided with a pillar forming the oil fill hole 1453, and the post extends to the front end housing 13 to enable a user to input lubricating oil into the oil fill hole 1453. In other examples, the oil fill hole may be further formed on the front end housing. The front end housing is formed with a pillar, which provides the oil fill hole. The pillar extends into the meshing point of the first transmission gear and the second transmission gear so that the oil fill hole extends to the meshing point of the first transmission gear and the second transmission gear.

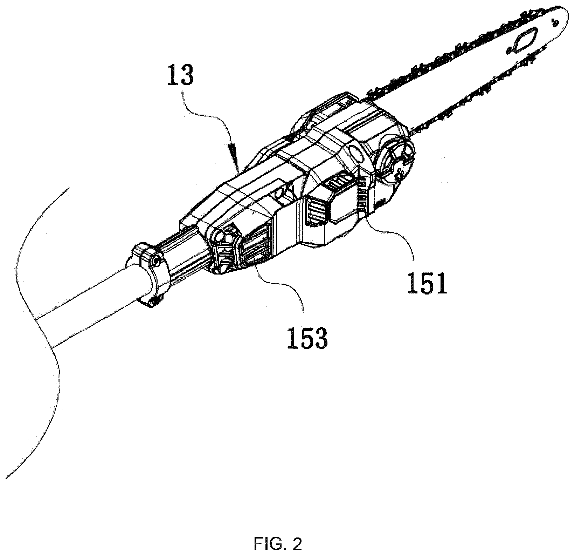

Referring to FIGS. 1, 2, and 5, the pole chain saw 100 further includes a fan 15 disposed behind the electric motor 11, and the fan 15 rotates about a fan axis. The front end housing 13 of the pole chain saw 100 is further formed with an air inlet and an air outlet. The fan 15 is used for generating a heat dissipation airflow that enters from the air inlet and flows out from the air outlet. In this example, the air inlet includes a first air inlet 151 disposed in front of the gearbox 145. The air outlet includes a first air outlet 153 and a second air outlet 154. Specifically, the first air outlet 153 and the second air outlet 154 are disposed radially outside the fan 15. In this manner, when the electric motor 11 is started, the fan 15 is driven to rotate, and the airflow enters the front end housing 13 from the first air inlet 151, flows through the gearbox 145 and the electric motor 11, and then flows out from the first air outlet 153 and the second air outlet 154, thereby taking away the heat generated on the electric motor 11 and the gearbox 145.

In this manner, the positions and number of the air inlets and air outlets are reasonably set, and the heat from the gearbox 145 is effectively dissipated through the airflow, thereby improving the service life of the gearbox.

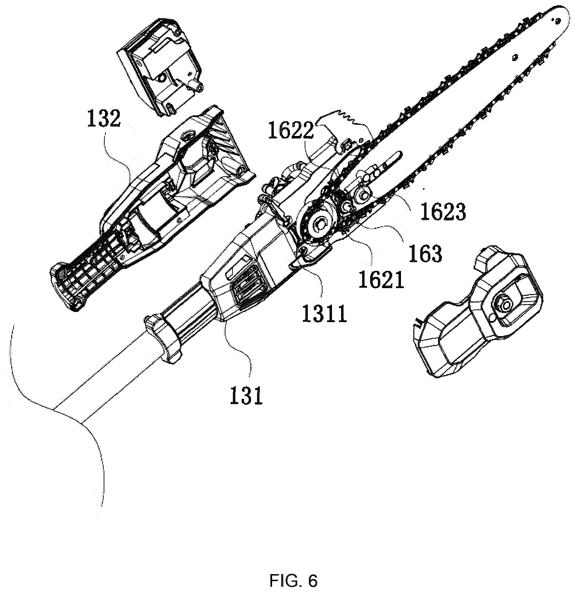

In some examples, as shown in FIG. 6, to further dissipate the heat from the gearbox 145, an air hole 1311 is formed on the first housing 131. The air hole 1311 is opposite to the gearbox 145. In this manner, in the working process of the pole chain saw 100, the heat generated on the gearbox 145 can be dissipated from the preceding air hole 1311.

As shown in FIGS. 1 and 6, the pole chain saw 100 further includes a chain tensioning assembly 16. The chain tensioning assembly 16 can automatically adjust a gap between the chain 122 and the guide plate 121, thereby improving the adaptability of the chain 122 and the guide plate 121 and improving the cutting efficiency. It is to be understood that during daily use of the pole chain saw 100, the chain 122 is prone to loosening due to work wear. The user adjusts the distance between the guide plate 121 and the chainwheel 144 through the chain tensioning assembly 16 to tension the chain 122. Next, the structure and working principle of the chain tensioning assembly 16 are introduced in detail.

Specifically, the chain tensioning assembly 16 includes at least a transmission component and a tensioning nut 163. The tensioning nut 163 can drive the transmission component to rotate synchronously. The transmission component includes a first gear 1621, a second gear 1622, and a transmission shaft 1623. The first gear 1621 is formed or sleeved on the tensioning nut 163, the second gear 1622 is sleeved on an end of the transmission shaft 1623, and the other end of the transmission shaft 1623 is connected to the guide plate 121. The first gear 1621 meshes with the second gear 1622. When the user rotates the tensioning nut 163, the tensioning nut 163 drives the first gear 1621 to rotate, the first gear 1621 drives the second gear 1622 to rotate, and the second gear 1622 drives the transmission shaft 1623 to move along the extension direction of the guide plate 121, thereby driving the guide plate 121 to move along the extension direction to adjust the tension of the chain 122.

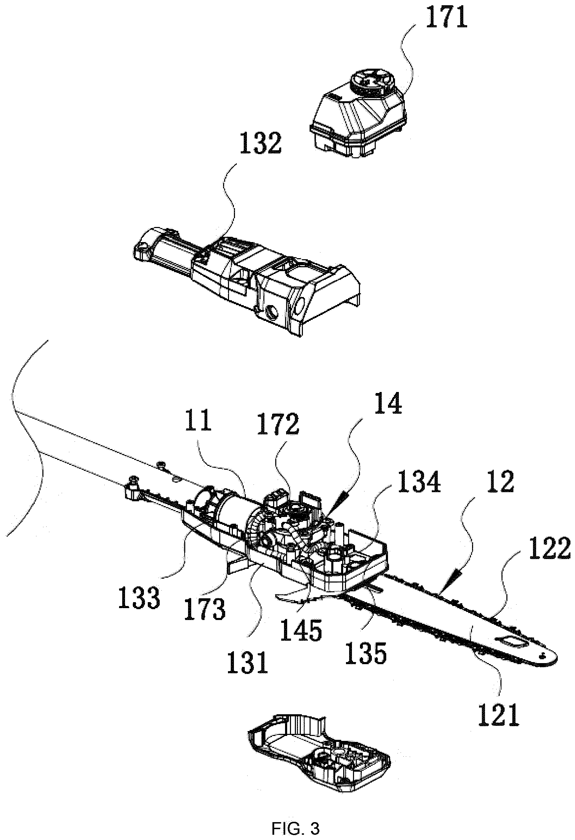

As shown in FIG. 3, the pole chain saw 100 further includes an oil supply assembly. The oil supply assembly includes an oil pot 171, an oil pump 172, and an oil pipe 173. The oil pot 17 is used for storing engine oil for lubricating the chain 122 or the guide plate 121. The front end housing 13 further includes a fixing portion 135 for fixing the oil pot 171. The oil pipe 173 connects the oil pot 171 to the oil pump 172. Through the oil pipe 173, the oil pump 172 pumps the engine oil in the oil pot 171 and transports the engine oil to the chain 122 or the guide plate 121, so as to lubricate the chain 122 and the guide plate 121.

The basic principles, main features, and advantages of this application are shown and described above. It is to be understood by those skilled in the art that the aforementioned examples do not limit the present application.

## Claims

1. A pole chain saw (100), comprising:
a connecting rod (20); and
a front end assembly (10) disposed at a front end of the connecting rod;
wherein the front end assembly comprises:
an electric motor (11);
an output device (12) comprising a guide plate (121) and a chain (122) wound around the guide plate;
a transmission assembly (14a) connecting the electric motor to the output device,
wherein the transmission assembly comprises an output shaft (143) and a chainwheel (144), wherein a motor shaft (111) of the electric motor drives the output shaft to rotate, and wherein the output shaft drives the chainwheel to rotate to drive the chain to rotate; and
a gearbox (145) supporting and accommodating at least part of the transmission assembly, **characterized in that,** at least part of the gearbox is made of metal, and an oil fill hole (1453) is formed on the gearbox.

2. The pole chain saw of claim 1, wherein the front end assembly further comprises a front end housing (13) for supporting the connecting rod, the front end housing comprises a first housing (131) and a second housing (132), a first accommodation chamber (133) and a second accommodation chamber (134) are formed between the first housing and the second housing.

3. The pole chain saw of claim 2, wherein the first accommodation chamber is used for accommodating the electric motor, and the second accommodation chamber is used for accommodating the gearbox.

4. The pole chain saw of claim 2, wherein the front end housing is formed with at least one air inlet (151) and at least one air outlet (153), and an airflow flowing into the front end housing from the at least one air inlet flows through the gearbox and the electric motor in sequence and then flows out from the at least one air outlet.

5. The pole chain saw of claim 4, wherein the at least one air inlet is located at a rear side of the gearbox, and the at least one air outlet is located radially outside a fan (15).

6. The pole chain saw of claim 2, wherein an air hole (1311) is formed on the front end housing at a position relative to the gearbox.

7. The pole chain saw of claim 1, wherein the gearbox comprises a first box lid (1451) and a second box lid (1452), wherein after being mounted, the first box lid and the second box lid form an accommodation space to accommodate at least part of the transmission assembly.

8. The pole chain saw of claim 7, wherein the transmission assembly comprises a first transmission gear (141), a second transmission gear (142), wherein the first transmission gear meshes with the second transmission gear to drive the second transmission gear to rotate, the second transmission gear drives the output shaft to rotate, and the output shaft drives the chainwheel to rotate to drive the chain to rotate.

9. The pole chain saw of claim 8, wherein an extension direction of the motor shaft is perpendicular to an extension direction of the output shaft.

10. The pole chain saw of claim 8, wherein the front end assembly further comprises a front end housing (13) for supporting the connecting rod, the oil fill hole (1453) is further formed on the front end housing, and the oil fill hole extends from the front end housing to a meshing point of the first transmission gear and the second transmission gear.

11. The pole chain saw of claim 8, wherein the transmission assembly further comprises a bearing (146) sleeved on the output shaft, and an outer race of the bearing has an interference fit with the gearbox.

12. The pole chain saw of claim 11, wherein an inner race of the bearing has a clearance fit with the output shaft.

13. The pole chain saw of claim 1, wherein the front end assembly further comprises a front end housing (13) for supporting the connecting rod, and at least part of the gearbox is integrally formed with a front end housing.

## Patentansprüche

1. Eine Stiel-Kettensäge (100), umfassend:
eine Verbindungsstange (20); und
eine Frontend-Baugruppe (10), die an einem vorderen Ende der Verbindungsstange angeordnet ist;
wobei die Frontend-Baugruppe umfasst:
einen Elektromotor (11);
eine Ausgangsvorrichtung (12), die eine Führungsschiene (121) und eine Kette (122) umfasst, die um die Führungsschiene herum verläuft;
eine Übertragungsbaugruppe (14a), die den Elektromotor mit der Ausgangsvorrichtung verbindet, wobei die Übertragungsbaugruppe eine Abtriebswelle (143) und ein Kettenrad (144) umfasst, wobei eine Motorwelle (111) des Elektromotors die Abtriebswelle antreibt, um sie in Rotation zu versetzen, und wobei die Abtriebswelle das Kettenrad antreibt, um die Kette in Rotation zu versetzen; und
ein Getriebegehäuse (145), das mindestens einen Teil der Übertragungsbaugruppe stützt und aufnimmt,
**dadurch gekennzeichnet, dass** mindestens ein Teil des Getriebegehäuses aus Metall besteht und eine Ölfüllöffnung (1453) im Getriebegehäuse ausgebildet ist.

2. Die Stiel-Kettensäge nach Anspruch 1, wobei die Frontend-Baugruppe ferner ein Frontend-Gehäuse (13) zur Unterstützung der Verbindungsstange umfasst, wobei das Frontend-Gehäuse ein erstes Gehäuse (131) und ein zweites Gehäuse (132) umfasst, und wobei eine erste Aufnahmekammer (133) und eine zweite Aufnahmekammer (134) zwischen dem ersten Gehäuse und dem zweiten Gehäuse ausgebildet sind.

3. Die Stiel-Kettensäge nach Anspruch 2, wobei die erste Aufnahmekammer zur Aufnahme des Elektromotors dient und die zweite Aufnahmekammer zur Aufnahme des Getriebegehäuses dient.

4. Die Stiel-Kettensäge nach Anspruch 2, wobei das Frontend-Gehäuse mindestens eine Lufteinlassöffnung (151) und mindestens eine Luftauslassöffnung (153) aufweist, und ein Luftstrom, der von der mindestens einen Lufteinlassöffnung in das Frontend-Gehäuse einströmt, nacheinander durch das Getriebegehäuse und den Elektromotor strömt und dann durch die mindestens eine Luftauslassöffnung ausströmt.

5. Die Stiel-Kettensäge nach Anspruch 4, wobei sich die mindestens eine Lufteinlassöffnung auf einer Rückseite des Getriebegehäuses befindet und die mindestens eine Luftauslassöffnung sich radial außerhalb eines Lüfters (15) befindet.

6. Die Stiel-Kettensäge nach Anspruch 2, wobei im Frontend-Gehäuse an einer Position relativ zum Getriebegehäuse eine Luftöffnung (1311) ausgebildet ist.

7. Die Stiel-Kettensäge nach Anspruch 1, wobei das Getriebegehäuse einen ersten Gehäusedeckel (1451) und einen zweiten Gehäusedeckel (1452) umfasst, wobei nach der Montage der erste Gehäusedeckel und der zweite Gehäusedeckel einen Aufnahmeraum bilden, um mindestens einen Teil der Übertragungsbaugruppe aufzunehmen.

8. Die Stiel-Kettensäge nach Anspruch 7, wobei die Übertragungsbaugruppe ein erstes Übertragungszahnrad (141) und ein zweites Übertragungszahnrad (142) umfasst, wobei das erste Übertragungszahnrad mit dem zweiten Übertragungszahnrad kämmt, um das zweite Übertragungszahnrad in Rotation zu versetzen, wobei das zweite Übertragungszahnrad die Abtriebswelle antreibt, um sie in Rotation zu versetzen, und wobei die Abtriebswelle das Kettenrad antreibt, um die Kette in Rotation zu versetzen.

9. Die Stiel-Kettensäge nach Anspruch 8, wobei eine Verlaufsrichtung der Motorwelle senkrecht zur Verlaufsrichtung der Abtriebswelle ist.

10. Die Stiel-Kettensäge nach Anspruch 8, wobei die Frontend-Baugruppe ferner ein Frontend-Gehäuse (13) zur Unterstützung der Verbindungsstange umfasst, die Ölfüllöffnung (1453) ferner im Frontend-Gehäuse ausgebildet ist, und wobei sich die Ölfüllöffnung vom Frontend-Gehäuse zu einem Eingriffspunkt des ersten Übertragungszahnrads und des zweiten Übertragungszahnrads erstreckt.

11. Die Stiel-Kettensäge nach Anspruch 8, wobei die Übertragungsbaugruppe ferner ein Lager (146) umfasst, das auf der Abtriebswelle sitzt, und wobei ein Außenring des Lagers eine Presspassung mit dem Getriebegehäuse aufweist.

12. Die Stiel-Kettensäge nach Anspruch 11, wobei ein Innenring des Lagers eine Spielpassung mit der Abtriebswelle aufweist.

13. Die Stiel-Kettensäge nach Anspruch 1, wobei die Frontend-Baugruppe ferner ein Frontend-Gehäuse (13) zur Unterstützung der Verbindungsstange umfasst, und mindestens ein Teil des Getriebegehäuses einstückig mit dem Frontend-Gehäuse ausgebildet ist.

## Revendications

1. Une scie à chaîne sur perche (100), comprenant :
une tige de connexion (20) ; et
un ensemble avant (10) disposé à une extrémité avant de la tige de connexion ;
dans lequel l'ensemble avant comprend :
un moteur électrique (11) ;
un dispositif de sortie (12) comprenant un guide-chaîne (121) et une chaîne (122) enroulée autour du guide-chaîne ;
un ensemble de transmission (14a) reliant le moteur électrique au dispositif de sortie, l'ensemble de transmission comprenant un arbre de sortie (143) et un pignon (144), dans lequel un arbre moteur (111) du moteur électrique entraîne l'arbre de sortie en rotation, et dans lequel l'arbre de sortie entraîne le pignon en rotation pour entraîner la chaîne en rotation ; et
un boîtier de transmission (145) supportant et accueillant au moins une partie de l'ensemble de transmission,
**caractérisé en ce qu'**au moins une partie du boîtier de transmission est en métal, et qu'un orifice de remplissage d'huile (1453) est formé sur le boîtier de transmission.

2. La scie à chaîne sur perche selon la revendication 1, dans laquelle l'ensemble avant comprend en outre un carter avant (13) destiné à supporter la tige de connexion, le carter avant comprenant un premier carter (131) et un deuxième carter (132), une première chambre de logement (133) et une deuxième chambre de logement (134) étant formées entre le premier carter et le deuxième carter.

3. La scie à chaîne sur perche selon la revendication 2, dans laquelle la première chambre de logement est conçue pour loger le moteur électrique, et la deuxième chambre de logement est conçue pour loger le boîtier de transmission.

4. La scie à chaîne sur perche selon la revendication 2, dans laquelle le carter avant est pourvu d'au moins une entrée d'air (151) et d'au moins une sortie d'air (153), et un flux d'air entrant dans le carter avant par l'au moins une entrée d'air traverse successivement le boîtier de transmission et le moteur électrique avant de s'échapper par l'au moins une sortie d'air.

5. La scie à chaîne sur perche selon la revendication 4, dans laquelle l'au moins une entrée d'air est située sur un côté arrière du boîtier de transmission, et l'au moins une sortie d'air est située radialement à l'extérieur d'un ventilateur (15).

6. La scie à chaîne sur perche selon la revendication 2, dans laquelle un orifice d'aération (1311) est formé sur le carter avant à une position correspondant au boîtier de transmission.

7. La scie à chaîne sur perche selon la revendication 1, dans laquelle le boîtier de transmission comprend un premier couvercle de boîtier (1451) et un deuxième couvercle de boîtier (1452), dans laquelle, après montage, le premier couvercle de boîtier et le deuxième couvercle de boîtier forment un espace de logement pour accueillir au moins une partie de l'ensemble de transmission.

8. La scie à chaîne sur perche selon la revendication 7, dans laquelle l'ensemble de transmission comprend un premier engrenage de transmission (141) et un deuxième engrenage de transmission (142), dans laquelle le premier engrenage de transmission engrène avec le deuxième engrenage de transmission pour entraîner la rotation du deuxième engrenage de transmission, le deuxième engrenage de transmission entraîne l'arbre de sortie en rotation, et l'arbre de sortie entraîne le pignon en rotation pour entraîner la chaîne en rotation.

9. La scie à chaîne sur perche selon la revendication 8, dans laquelle une direction d'extension de l'arbre moteur est perpendiculaire à une direction d'extension de l'arbre de sortie.

10. La scie à chaîne sur perche selon la revendication 8, dans laquelle l'ensemble avant comprend en outre un carter avant (13) destiné à supporter la tige de connexion, l'orifice de remplissage d'huile (1453) étant en outre formé sur le carter avant, et l'orifice de remplissage d'huile s'étendant du carter avant jusqu'à un point d'engrènement du premier engrenage de transmission et du deuxième engrenage de transmission.

11. La scie à chaîne sur perche selon la revendication 8, dans laquelle l'ensemble de transmission comprend en outre un roulement (146) monté sur l'arbre de sortie, et une bague extérieure du roulement présente un ajustement serré avec le boîtier de transmission.

12. La scie à chaîne sur perche selon la revendication 11, dans laquelle une bague intérieure du roulement présente un ajustement libre avec l'arbre de sortie.

13. La scie à chaîne sur perche selon la revendication 1, dans laquelle l'ensemble avant comprend en outre un carter avant (13) destiné à supporter la tige de connexion, et au moins une partie du boîtier de transmission est formée d'un seul tenant avec le carter avant.
